# EUROPEAN PATENT APPLICATION

(11) **EP 4 559 751 A1**
(43) Date of publication of application: **28.05.2025**
(21) Application number: 23211691.3
(22) Date of filing: 23.11.2023
(51) Int. Cl.: B60Q 1/30, H04B 7/00, H04B 10/114

(54) **VEHICLE LAMP AND VEHICLE COMPRISING THE LAMP**

(71) Applicant: Hella Autotechnik Nova, s.r.o., 78985 Mohelnice (CZ)
(72) Inventor: Koreny, Martin, 789 85 Mohelnice (CZ)
(74) Representative: Behr-Wenning, Gregor

(57) **Abstract**

Vehicle lamp and a vehicle comprising this lamp. The lamp comprises a first part (1) and a second part (2), wherein each part has its own light source (3) and has a wireless communication unit (4) for direct wireless communication between the first part (1) and the second part (2). This communication can be used for synchronizing illumination of both parts. Optical or radio communication can be used for the wireless communication.

## Description

### Technical field

The present invention relates to vehicle lamps having multiple parts, where the parts are to some extent independent but at the same time need to communicate to provide synchronized illumination functions.

### Background of the Invention

Two-part vehicle lamps, where the parts are mechanically unconnected but form a single lamp, are known in the art. A typical case is an automobile taillight having one part mounted to a trunk lid and the other part to the automobile's body. The lid rotates with respect to the body when opened which is why the two parts are independently mounted and are not mechanically connected. Both parts however need to be synchronized, e.g., the same illumination functions need to be on and off at the same times. Improper synchronization would, for example, be very noticeable in turn signals.

This synchronization is especially important for animated illumination functions, e.g., for turn signals or illuminated front grilles with many individual LED sources turned on and off in a certain sequence.

The synchronization in the state of the art can be done in two ways. First, the two parts can be connected by a cable which extends form the first part, to the hinge connecting the lid to the body and then to the second part. There is thus a requirement for quite a long data connection cable, which naturally increases costs, ecological impact, weight etc. The cable also needs a passage in the trunk lid as well as along the main automobile body. This means that the automobile has to be ready for mounting of such a two-part taillight from the time of its design and manufacture. This passage also takes up space which could be used for other components, which is another disadvantage of this approach.

Second way of synchronization is done by the automobile's control unit. Both parts are thus connected to a communication bus and are synchronized by being both directly controlled by the control unit. Each of the parts thus takes up a bus slot which then cannot be used for some other function. The ongoing communication via the bus can also block communication needed for other systems of the automobile, takes up computational resources of the control unit etc.

Both known approaches thus have many drawbacks. It would therefore be desirable to provide a multi-part vehicle lamp with an improved approach to synchronization of the individual parts.

### Summary of the Invention

The shortcomings of the solutions known in the prior art are to some extent eliminated by a vehicle lamp comprising a first part and a second part, wherein each part has its own light source and comprises a wireless communication unit. The communication units serve for a direct wireless communication in at least one way between the first part and the second part for synchronizing illumination of both parts. At least one-way communication means that the two parts are wirelessly connected such that at least one of the parts can send data to the other part, but the other part does not necessarily have to be able to send any data back.

The communication is thus used for sending data which enable both parts to provide illumination in sync, e.g., both parts can be turned on and off at the same times, any potential animations continue smoothly from part to the other part, etc. Preferably, the communication units enable a two-way communication, so that correct receiving of synchronization instructions can be verified. The communication units can be provided with shielding to protect the communication from noise which might disrupt it and to conversely protect other vehicle systems from being influenced by the wireless communication between the lamp parts.

Each of the parts can further comprise its own power cable or connector, its own optical components such as lenses, reflectors, or cover lenses; its own mounting attachments, casings, actuators, controllers etc. Preferably, the parts can be mounted to a vehicle independently and can be moved freely with respect to each other if the vehicle doesn't prevent such movement. In other words, there is preferably no direct mechanical connection between the lamp parts.

Mounting one part on a vehicle body and the other part to a trunk lid is the most common placement for two-part lamps. It is also possible to e.g., mount one part on doors and the other on the vehicle body, to mount one part on the vehicle's hood and the other part on the body next to the hood etc. The wireless communication unit can for example be a radio unit, optical wireless communications unit, Bluetooth unit, wi-fi unit, infrared communication unit etc.

The multi-part vehicle lamp according to the invention thus enables the parts to communicate and coordinate with each other, without need for data cables extending between the parts, without the need for taking up multiple slots on a vehicle bus etc. Various illumination functions using blinking, color changes, intensity changes etc. can thus be used across the whole lamp. Compared to lamps known from the state of the art, the presented lamp is easier to mount to a vehicle, doesn't require passages for communication cables running between the parts, and only needs one bus slot for communication with the vehicle's control unit.

Preferably, each part is independently mountable to a vehicle. This independence can be obtained e.g., by providing each part with its own mounting attachments, such as screw holes or snap-on connecting arms. This independence is especially useful if each part is intended for a different vehicle component where the components are movable.

The first part is preferably moveable with respect to the second part, i.e., the parts can be moved relative to each other, for example when a trunk lid or a hood is open. The type of movement can thus be defined after mounting of the lamp to a vehicle, where rotational movement is the most common.

For example, each part can comprise its own casing. This enables both parts to be mounted independently and to be moved after the mounting.

Preferably, at least one of the parts comprises a control unit for controlling the light source of this part and for controlling the light source of the other part via the communication between the wireless communication units. The other part can also have a control unit, which receives and processes instructions and controls the respective light source based on these instructions. It is also possible to only have one control unit for the whole lamp, where this one control unit controls both light sources, one of them via the wireless communication link. The at least one control unit is thus configured to provide the required synchronization.

In one advantageous variation of the lamp, the wireless communication units are optical wireless communication units. Light is thus used to transmit data between the parts. The light can be visible light, infrared light, ultraviolet light etc. Direct visibility between the lamp parts might be required for this type of communication. The communication units are then preferably arranged on adjacent sides of the parts, e.g., such that only two casing walls (one for each part) and an air gap are between the communication units.

Each part can then comprise a window, which is from a material at least partially transparent in at least a part of light spectrum, wherein the optical wireless communication units are directed at each other through the windows. The windows are thus parts of the lamps, which provide mechanical but not optical barrier. The windows can thus be parts of lamp casings, so that each part can be enclosed by the casing and protected from water, dust etc., while the optical communication rays can pass through the windows.

The optical wireless communication units can be provided with optical shields for protection of the wireless communication from stray light. These shields can e.g., by from non-transparent plastic. Since the light source of each part produces light, and there can be many further sources of light around the lamp, such as headlights of a trailing vehicle, it can be advantageous to provide these optical shields that can protect the communication from being affected by the light.

In another advantageous variation, the wireless communication units are radio communication units. Since radio waves do not need direct visibility, this type of communication can be more suitable for some applications.

The radio communication units can comprise modules for encrypting the communication between the units. These modules can be parts of control units of the lamp parts, e.g., the modules can be software modules implemented by the respective control units.

The radio communication units can be provided with electromagnetic shields for protection of the wireless communication from stray electromagnetic signals. Similarly to the optical shields mentioned above, these EM shields prevent the communication between the parts from being affected and/or from affecting neighboring electronical components, which can be located in the lamp or elsewhere on the vehicle.

The shortcomings of the solutions known in the prior art are to some extent also eliminated by a vehicle comprising at least a first component and a second component, wherein the components are mutually movable. The vehicle comprises at least one vehicle lamp according to the invention, wherein the first part of the lamp is attached to the first component and the second part of the lamp is attached to the second component. The parts are thus independently mounted and can be moved relative to each other when the respective components move. The wireless communication units of both parts of the lamp are within a communication range of each other in at least one position of the first component with respect to the second component. I.e., when the components of the vehicle are moved, such as when doors or lid are open, they are being arranged between different positions, such as between a closed lid position and an open lid position. In some of those positions, the lamp parts can be moved out of sight of each other or out of range, and the parts thus cannot communicate with each other. In at least one position, however, the communication link can be established, and the parts can communicate and can synchronize their functions.

Preferably, the parts can communicate when the components are in their default position, e.g., when doors are fully closed, trunk lid or hood is fully closed etc.

The first component can be a part of a body of the vehicle and the second component can be a part of a door, lid, hatch, or tailgate of the vehicle. On these components, having a two-part lamp can be the most advantageous, since the components can be opened and closed, and it is desirable to provide communication between the lamp parts which does not hinder the opening and closing.

The vehicle can comprise a processing module connected to at least one of the wireless communication units of the lamp, wherein the processing module is configured for assessing whether there is a wireless connection established between the wireless communication units and how strong this connection is. In other words, the module receives and processed data about the communication (or lack of communication) between the lamp parts. Based on this assessment of connection, the processing module can be further configured to assess whether the second component is properly positioned with respect to the first component. In other words, the lamp can be used as an open/close sensor for the components provided with the lamp parts.

For example, if a trunk lid is properly closed, two-part taillight can have an optical communication between its parts because the parts are directly next to each other in this lid position. When the lid is open or improperly closed, there cannot be a direct line of sight and there is thus no communication. The processing module can learn from the provided data that attempts to establish the optical communication are unsuccessful, and it can thus assess that the lid is not closed. This information can be provided to the driver, e.g., using a standard warning light on a dashboard.

For radio communication, a direct line of sight is not needed, but the strength of radio signal received by one communication unit from the other communication unit can be used to check how far from each other the lamp parts are. A weak radio signal thus indicates that the lid (or other component) is opened or otherwise improperly positioned.

### Description of drawings

A summary of the invention is further described by means of exemplary embodiments thereof, which are described with reference to the accompanying drawings, in which:
- Fig 1.: Shows a schematic view of an automobile from the back, wherein the automobile has two taillights which are embodiments of vehicle lamps according to the present invention, wherein each taillight has two parts, one of which is mounted to the automobile's trunk lid.
- Fig 2.: Shows an exemplary schematic drawing of a vehicle lamp according to the invention, where the lamp has two parts provided with light sources and units for wireless communication.
- Fig 3.: Shows another exemplary schematic drawing of the lamp in an embodiment, where the wireless communication is a one-way visible light communication.
- Fig 4.: Shows another exemplary schematic drawing of the lamp in an embodiment, where the wireless communication is a two-way radio communication.

### Exemplary Embodiments of the Invention

The invention will be further described by means of exemplary embodiments with reference to the respective drawings.

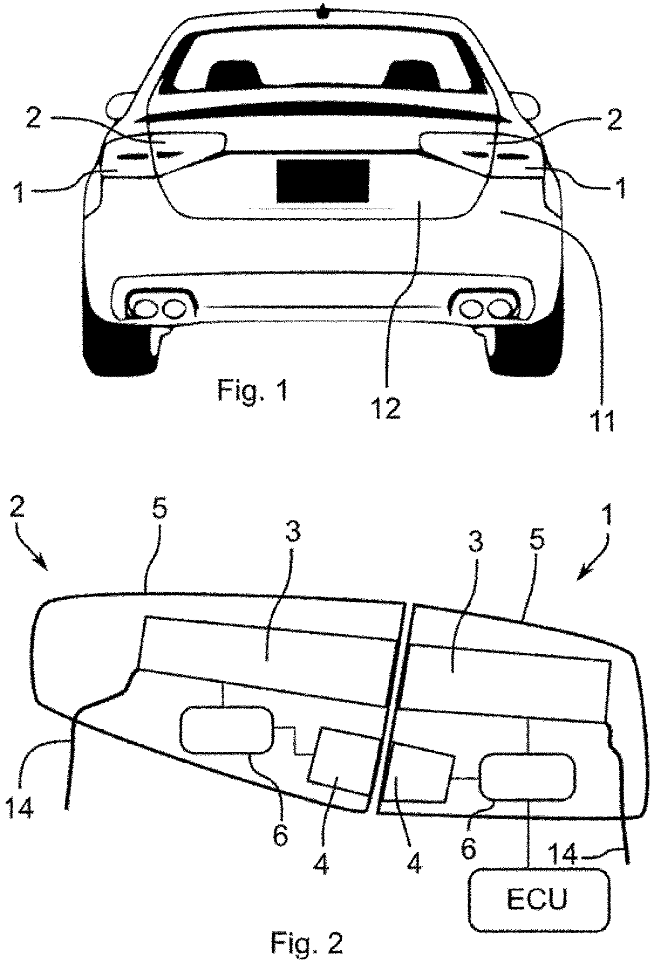

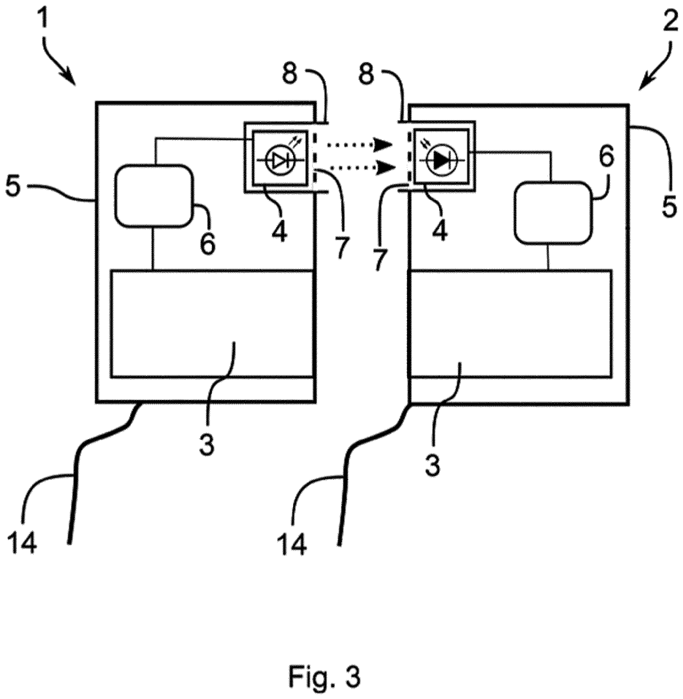

A first exemplary embodiment of the invention is depicted in figs. 1 to 3. The embodiment is an automobile lamp, specifically a taillight, with its main components shown in fig. 2 and with some more details in fig. 3, and its mounting as a right taillight on an automobile shown in fig. 1.

The lamp comprises a first part 1 and a second part 2. Each part comprises a light source 3, which in this embodiment forms multiple taillight modules (not individually shown) including brake light, taillight, reversing light and turn signals. Each part also has its own casing 5 which facilitates its mounting to the automobile, and which encapsulates all the other components. There is a power cable 14 connecting each part with the automobile's battery to provide power for all the electronical components, e.g., to the light source 3 and to a control unit 6 and communication unit 4 which will be described below. Each of the two parts is thus to some extent an individual and independent lighting assembly. They however still form one taillight, so the independence needs to be limited, which is why the parts communicate which each other as described below.

The first part 1 is intended for mounting to the main part of the automobile's body, next the rear fender, between the C-pillar and the rear bumper, as is usual for taillights. It comprises a wireless communication unit 4 with an LED which serves as a transmitter for visible light communication. The communication unit 4 is connected to a control unit 6, which provides synchronization control data to the second part's 2 control unit 6 via the visible light wireless communication provided by the two communication units 4. The first part's 1 control unit 6 controls illumination of the first part's 1 light source 3 and indirectly and wirelessly also the second part's 2 light source 3. When the lamp is mounted to the automobile, the control unit 6 of the first part 1 is connected to the ECU (not shown in fig. 3 but can be seen in fig. 2) and the ECU, as the automobile's main computer, provides instructions as to which lights need to be on at any specific moment.

The second part 2 is intended for mounting to the automobile's trunk lid. It comprises a wireless communication unit 4 with a photodiode which serves as a receiver for visible light communication. The communication unit 4 is connected to a control unit 6, which processes electrical signals provided by the photodiode and controls the light source 3 according to instructions received in this signal. The second part's 2 control unit 6 thus depends on instructions from the first part's 1 control unit 6 regarding which modules of the light source 3 are switched on and when.

For both parts, there is a clear window 7 provided in the casing 5 right in front of the respective communication unit 4. In the embodiment, the windows 7 are from a clear polycarbonate, while the rest of the casings 5 is from black plastic material. Each of the communication units 4 is also surrounded from the inside of the casing 5 by an optical shield 8 which prevents any stray light from the light sources 3 to interfere with the optical wireless communication. The shields extend partially to the outside (see fig. 3), such that the gap between the parts is smaller at the shielded area where the communication occurs. In this way, the optical shields 8 also protect the communication units 4 from light from the outside, such that e.g., sunlight or light from other vehicles has a limited impact on the optical communication.

The two parts of the lamp are thus connected by their wireless communication units 4, which in this embodiment use visible light to transfer data. Illumination by both parts can thus be synchronized, i.e., both brake light modules, which together form the taillight's seemingly continuously brake light, can be turned on and off at the same time, blinking of turn signal modules is synchronized across both parts, animations of illumination functions are not broken at the gap between the parts etc. The whole taillight needs only one slot at a bus connecting it to other vehicle systems and communicates with the ECU via a single channel (only one part has direct communication with the ECU).

On the resulting automobile, which has two taillights as described in the above embodiment, both taillights have analogous components and connection to the ECU. The control units 6 of the second parts 2 of the taillights are further connected to each other by a communication cable to provide some redundancy for the above-mentioned synchronization. The control units 6 can exchange instructions from the first parts 1 across the trunk lid and can thus to some extent function properly even if at one of the taillights, the optical communication was lost, e.g., due to a malfunction or due to dirt etc.

On the automobile, in this embodiment, the first part 1 of the lamp is located on a first component 11 - the body, while the second part 2 is located on a second component 12 - the lid. The two components are thus rotatably connected to each other which is why the wireless communication used between the lamp parts is advantageous.

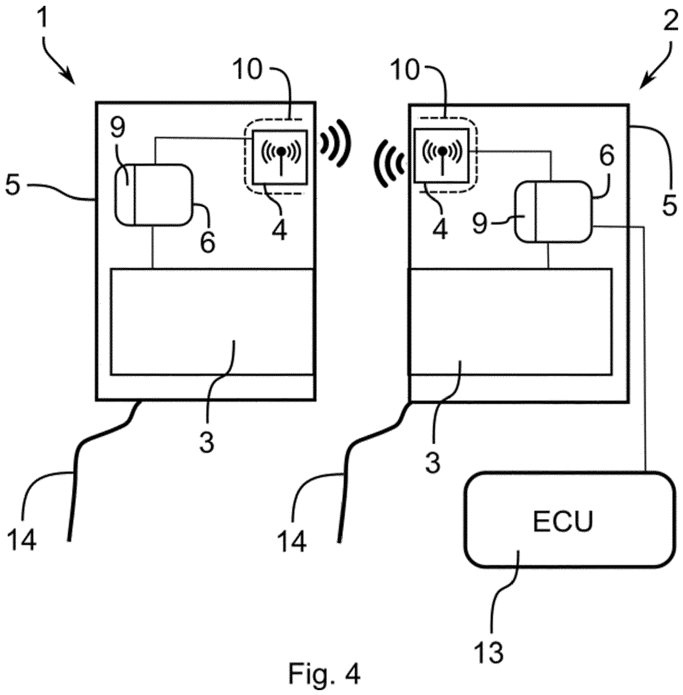

A second exemplary embodiment of the invention is shown in figs. 1 and 4. In this embodiment, the vehicle lamp is again an automobile taillight. Illumination components of this embodiment are thus the same as in the first embodiment and only different features of this embodiment will be described herein, while other features are analogous to the first embodiment.

The wireless communication in this embodiment is a two-way radio communication. Each communication unit 4 thus comprises a radio transceiver. The optical shield from the first embodiment is thus replaced by an electromagnetic shield 10 which protects the communication units 4 from interference from other components of the lamp parts (e.g., from any EM radiation caused by a PCB carrying the LEDs of the light sources 3). A metal mesh or a plastic casing with EM shielding paint can be for example used for this shield. Each control unit 6 further comprises a module 9 for encryption which cooperates (provides encryption, modulation etc.) with the radio communication units 4. The communication is thus protected, and the communication units 4 can only communicate with each other, they won't receive data from any potential stray radio waves from other vehicle systems.

In this embodiment, the second part 2 is connected to the ECU, while the first part 1 is not. The control unit 6 of the second part 2 is thus the one that provides synchronization instructions. Due to the communication being a two-way communication, this control units 6 receives confirmation that the instructions are being correctly received and read by the first part's 1 control unit 6. The second part's 2 control unit 6 thus receives data which confirm that the radio communication link is established, and the signal is strong enough for proper synchronization.

Thanks to these confirmations, the taillight in this embodiment can further be used as a trunk open/closed sensor, i.e., a sensor that provides information whether the trunk lid is correctly closed or not. For this purpose, the ECU comprises a software processing module 13 that receives data from the second part's 2 control unit 6 about how strong the radio signal between the communication units 4 is. The strength of the radio signal describes how far from each other the lamp parts are. Since they are at their closest when the trunk is fully closed, the processing module 13 can straightforwardly assess whether the trunk is fully closed (signal is the strongest) or is not fully closed (signal is weaker or the communication link cannot even be established).

The data from the ECU can then be shown to the driver, e.g., via a warning light on a dashboard or on a dashboard display. Either or both of the taillights can thusly supplement a standard trunk open/closed sensor, or they can even replace it in some automobiles.

In further alternative embodiments, the vehicle lamp can for example be an assembly of front headlights and illuminated front grille. Turn signals are partially at the headlights and partially at the grille, so the first part 1 of the lamp is one of the headlights and the second part 2 is part of the grille. The light sources 3 are the orange lights serving as turn signals. Other features of this embodiment can be analogous to the first or second embodiments.

In other embodiments, the lamp can be a decorative/advertisement illumination assembly located at one side of a vehicle, partially at one or more vehicle doors. E.g., the decorative assembly can have a first part 1 one front door, second part 2 on a body (pillar) and a third part on rear door. The second part 2 then can have two communication units 4 and can provide synchronization instruction to both the first and third parts.

A third embodiment of the invention is an automobile which comprises two lamps according to the first or second embodiment, as can be seen in fig. 1. The automobile thus has two two-part taillights, and the parts can communicate wirelessly within each taillight. Detailed description of the lamp features was provided above. Other components of the automobile can be as known to skilled persons, e.g., the automobile comprises wheels, engine, body parts, seats, and electronics, as usual.

### Reference list

- 1.: first part
- 2.: second part
- 3.: light source
- 4.: communication unit
- 5.: casing
- 6.: control unit
- 7.: window
- 8.: optical shield
- 9.: module for encryption
- 10.: electromagnetic shield
- 11.: first component
- 12.: second component
- 13.: processing module
- 14.: power cable

## Claims

1. Vehicle lamp comprising a first part (1) and a second part (2), wherein each part has its own light source (3), **characterized in that** each part comprises a wireless communication unit (4) for direct wireless communication in at least one way between the first part (1) and the second part (2) for synchronizing illumination of both parts.

2. The vehicle lamp according to claim 1 **wherein** each part is independently mountable to a vehicle.

3. The vehicle lamp according to any preceding claim **wherein** the first part (1) is moveable with respect to the second part (2).

4. The vehicle lamp according to any preceding claim **wherein** each part comprises its own casing (5).

5. The vehicle lamp according to any preceding claim **wherein** one of the parts comprises a control unit (6) for controlling the light source (3) of this part and for controlling the light source (3) of the other part via the communication between the wireless communication units (4).

6. The vehicle lamp according to any preceding claim **wherein** the wireless communication units (4) are optical wireless communication units (4).

7. The vehicle lamp according to claim 6 **wherein** each part comprises a window (7), which is from a material at least partially transparent in at least a part of light spectrum, wherein the optical wireless communication units (4) are directed at each other through the windows (7).

8. The vehicle lamp according to claim 6 or 7 **wherein** the optical wireless communication units (4) are provided with optical shield (8) for protection of the wireless communication from stray light.

9. The vehicle lamp according to any one of claims 1 to 5 **wherein** the wireless communication units (4) are radio communication units (4).

10. The vehicle lamp according to claim 9 **wherein** the radio communication units (4) comprise modules (9) for encrypting the communication between the communication units (4).

11. The vehicle lamp according to claim 9 or 10 **wherein** the radio communication units (4) are provided with electromagnetic shield (10) for protection of the wireless communication from stray electromagnetic signals.

12. Vehicle comprising at least a first component (11) and a second component (12), wherein the components are mutually movable, **characterized in that** the vehicle comprises at least one vehicle lamp according to any preceding claim, wherein the first part (1) of the lamp is attached to the first component (11) and the second part (2) of the lamp is attached to the second component (12), wherein the wireless communication units (4) of both parts of the lamp are within a communication range of each other in at least one position of the first component (11) with respect to the second component (12).

13. The vehicle according to claim 12 **wherein** the first component (11) is a part of a body of the vehicle and the second component (12) is a part of a door, lid, hatch, or tailgate of the vehicle.

14. The vehicle according to claim 13 **wherein** the vehicle comprises a processing module (13) connected to at least one of the wireless communication units (4) of the lamp, wherein the processing module (13) is configured for assessing whether there is a wireless connection established between the wireless communication units (4) and how strong this connection is, and based on this assessment of connection, the processing module (13) is further configured to assess whether the second component (12) is properly positioned with respect to the first component (11).
